# EUROPEAN PATENT SPECIFICATION

(11) **EP 2 020 370 B1**
(45) Date of publication and mention of the grant of the patent: **09.01.2013**
(21) Application number: 08252514.8
(22) Date of filing: 24.07.2008
(51) Int. Cl.: B62J 6/02, B62J 6/00

(54) **Straddle-type vehicle**
Grätschsitz-Fahrzeug
Véhicule de type à siège en califourchon

(30) Priority: 02.08.2007 JP 2007202264
(43) Date of publication of application: 04.02.2009
(73) Proprietor: Yamaha Hatsudoki Kabushiki Kaisha, Shizuoka-ken 438-8501 (JP)
(72) Inventor: Ohzono, Gen, Iwata-shi, Shizuoka-ken 438-8501 (JP)
(74) Representative: Moreland, David

(56) References cited:
- EP-A- 1 495 953
- EP-A- 1 645 466

## Description

### FIELD OF THE INVENTION

The present invention relates to a straddle-type vehicle, in which a headlight and a flasher lamp are provided on a body cowl.

### BACKGROUND TO THE INVENTION

A method of providing a body cowl forwardly of a steering head pipe is widely used in straddle-type vehicles such as motorcycles, etc. A body cowl is provided with a headlight and a flasher lamp. A headlight includes a headlight bulb and a reflector, by which light irradiated from the headlight bulb is reflected forward. A front portion of the headlight is covered by a headlight lens mounted along an outer periphery of the reflector.

For such straddle-type vehicles provided with a body cowl, a construction is known in which a headlight is provided centrally of the body cowl and a pair ot flasher lamps are provided on right and left ends. Such an arrangement is disclosed in, for example, JP-A-2005-041476 according to the preamble of claim 1. In this manner, by separating the flasher lamps from the headlight, it is possible to suppress a decrease in visibility of the flasher lamps when the headlight is illuminated.

In order to improve the handling quality of a vehicle body, it is preferred to make a vehicle width as small as possible.

However, the body cowl described above involves the following problem. That is, in order to ensure the visibility of the flasher lamp, it is necessary to separate the flasher lamps from the headlight, thus causing a problem that it is difficult to make a vehicle width small.

In addition, it is conceivable to use a flasher lamp having a large luminance to thereby make the flasher lamp close to a headlight while ensuring the visibility of the flasher lamp. However, a flasher lamp having a large luminance is large in power consumption and so not preferable.

Hereupon, the invention has been thought of in view of the situation and has its object to provide a straddle-type vehicle having a small vehicle width while ensuring visibility of a flasher lamp.

### SUMMARY OF THE INVENTION

According to a first aspect of the present invention there is provided a straddle-type vehicle comprising:
a body cowl;
a headlight unit provided centrally of the body cowl, wherein the headlight unit includes a headlight and a headlight lens which covers the front of the headlight, said headlight comprising a headlight bulb and a reflector, by which light irradiated from the headlight bulb is reflected forward; and
a flasher lamp arranged on a side end portion of the body cowl,
wherein, as viewed from the front of a vehicle:
an outer periphery of the reflector is provided inwardly of an outer periphery of the headlight lens;
the flasher lamp is provided outwardly of the outer periphery of the headlight lens;,
the outer periphery of the reflector includes a reflector straight portion formed in a straight manner; and
the reflector straight portion is positioned between the headlight bulb and the flasher lamp.

The reflector may include a reflector planar portion formed rearward of the reflector straight portion to be made planar.

The reflector may further include a reflector outer wall formed outwardly of the reflector from the reflector straight portion as viewed from the front of a vehicle. The reflector outer wall may be extended rearward from the reflector straight portion.

As viewed from the front of a vehicle, an outer periphery of the flasher lamp may include a flasher lamp straight portion formed straight. The reflector straight portion and the flasher lamp straight portion may be arranged substantially in parallel to each other. The flasher lamp straight portion may be positioned toward the headlight lens on the outer periphery of the flasher lamp.

As viewed from the front of a vehicle, the body cowl may include an upper cowl portion, on which the headlight unit is provided, a lower cowl portion, on which the flasher lamp is provided, and a constricted portion formed at a boundary of the upper cowl portion and the lower cowl portion. The upper cowl portion may be smaller in width than the lower cowl portion.

As viewed from the front of a vehicle, the outer periphery of the reflector may further include a first curved portion and a second curved portion, which are formed curvilinearly. One end of the reflector straight portion may be contiguous to the first curved portion. The other end of the reflector straight portion may be contiguous to the second curved portion.

A vehicle according to another aspect of the present invention comprises a steering head pipe, a body cowl arranged forwardly of the steering head pipe, a headlight unit provided centrally of the body cowl, and a flasher lamp arranged on a side end portion of the body cowl, and that the headlight unit includes a headlight and a headlight lens, which covers the front of the headlight, and the headlight comprises a headlight bulb and a reflector, by which light irradiated from the headlight bulb is reflected forward. As viewed from the front of a vehicle, an outer periphery of the reflector is provided inwardly of an outer periphery of the headlight lens, the flasher lamp is provided outwardly of the outer periphery of the headlight lens, the outer periphery of the reflector includes a reflector straight portion formed in a straight manner, and the reflector straight portion is positioned between the headlight bulb and the flasher lamp.

In this manner, since the outer periphery of the reflector is provided inwardly of an outer periphery of the headlight lens, it is possible to make the flasher lamp close to the headlight lens while ensuring the size of the headlight lens. Consequently, it is possible to decrease the straddle-ride type vehicle in vehicle width.

The reflector may include a reflector planar portion formed rearward of the reflector straight portion to be made planar.

Therefore, light irradiated toward the flasher lamp from the headlight bulb is intercepted by the reflector straight portion. Accordingly, it is possible to improve the flasher lamp in visibility as compared with the case where an outer periphery of a reflector is formed curvilinearly toward a flasher lamp. Consequently, it is possible to use a flasher lamp bulb having a small power consumption while maintaining a flasher lamp in visibility.

Also, since the flasher lamp is improved in visibility, it is possible to make the flasher lamps, which are provided at both ends of the body cowl, close to the headlight unit provided centrally of the body cowl. Consequently, it is possible to decrease the straddle-ride type vehicle in vehicle width also in the case where a headlight unit and a flasher lamp are provided integrally on a body cowl.

Further, by forming the reflector planar portion, light irradiated from the headlight bulb can be focused forward as compared with the case where a whole inner wall surface of a reflector is defined by a curved surface.

The reflector may further include a reflector outer wall formed outwardly of the reflector from the reflector straight portion as viewed from the front of a vehicle, and the reflector outer wall may be extended rearward from the reflector straight portion.

As viewed from the front of a vehicle, an outer periphery of the flasher lamp may include a flasher lamp straight portion formed straight. The reflector straight portion and the flasher lamp straight portion may be arranged substantially parallel to each other, and the flasher lamp straight portion may be positioned toward the headlight lens on the outer periphery of the flasher lamp.

As viewed from the front of a vehicle, the body cowl may include an upper cowl portion, on which the headlight unit is provided, a lower cowl portion, on which the flasher lamp is provided, and a constricted portion formed at a boundary of the upper cowl portion and the lower cowl portion. As viewed from the front of a vehicle, the upper cowl portion may be smaller in width than the lower cowl portion.

As viewed from the front of a vehicle, the outer periphery of the reflector may further include a first curved portion and a second curved portion, which are formed curvilinearly. One end of the reflector straight portion may be contiguous to the first curved portion and the other end of the reflector straight portion may be contiguous to the second curved portion.

According to the feature of the invention, it is possible to provide a straddle-type vehicle having a small vehicle width while ensuring visibility of a flasher lamp.

### BRIEF DESCRIPTION OF THE DRAWINGS

These and other aspects of the present invention will now be described, by way of example only, with reference to the accompanying drawings, in which:
Fig. 1 is a left side view showing a motorcycle according to an embodiment of the invention;
Fig. 2 is a front view showing the motorcycle according to the embodiment of the invention;
Fig. 3 is an enlarged, front view showing an upper portion of a body cowl according to the embodiment of the invention;
Fig. 4 is an enlarged, side front view showing the upper portion of the body cowl according to the embodiment of the invention;
Fig. 5 is an enlarged, front view showing a left side of the body cowl according to the embodiment of the invention; and
Fig. 6 is a plan view showing the upper portion of the body cowl according to the embodiment of the invention.

### DETAILED DESCRIPTION OF THE DRAWINGS

An embodiment of a straddle-type vehicle according to the invention will be described with reference to the drawings. In addition, the same or similar parts in the following drawings are denoted by the same or similar reference numerals. However, it should be kept in mind that the drawings are schematic and ratios of respective dimensions may different from actual ones.

Accordingly, specific dimensions, etc. should be determined taking the following descriptions into consideration. Also, there are of course included parts, of which dimensional relationships and ratios are different from one another among the figures.

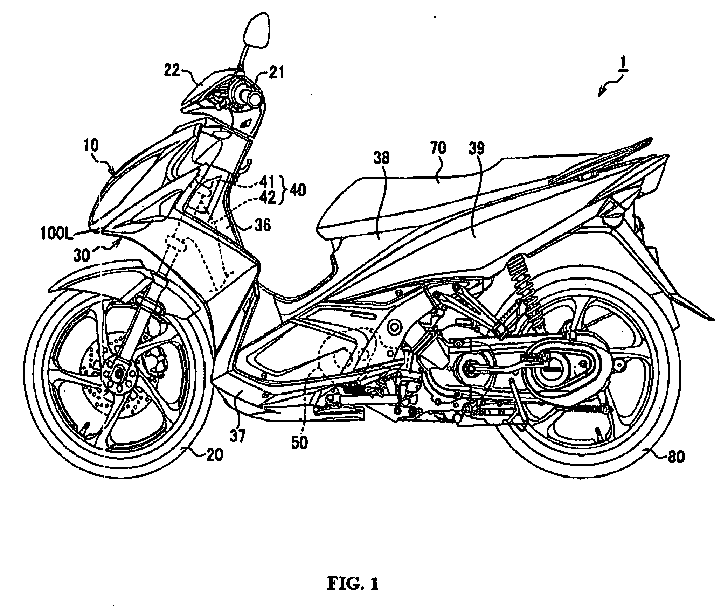

Fig. 1 is a left side view showing a motorcycle 1 being a straddle-type vehicle according to the embodiment. As shown in Fig. 1, the motorcycle 1 comprises a so-called underbone-type motorcycle, of which a body frame 40 is arranged under as compared with a conventional straddle-type motorcycle.

The motorcycle 1 comprises a front wheel 20 and a rear wheel 80 and a driving force generated by an engine 50 drives the rear wheel 80.

The motorcycle 1 is covered by a plurality of body covers.
Specifically, the motorcycle 1 is covered by a body cowl 30, a leg shield 36, an undercover 37, a seat undercover 38, and a side cover 39.

The body cowl 30 is arranged forwardly of a steering head pipe 41. The leg shield 36 is arranged forwardly of rider's legs with a rider seated on a seat 70. The leg shield 36 is fixed to a downtube 42 extending downward from the steering head pipe 41. The body cowl 30 is mounted to the leg shield 36.

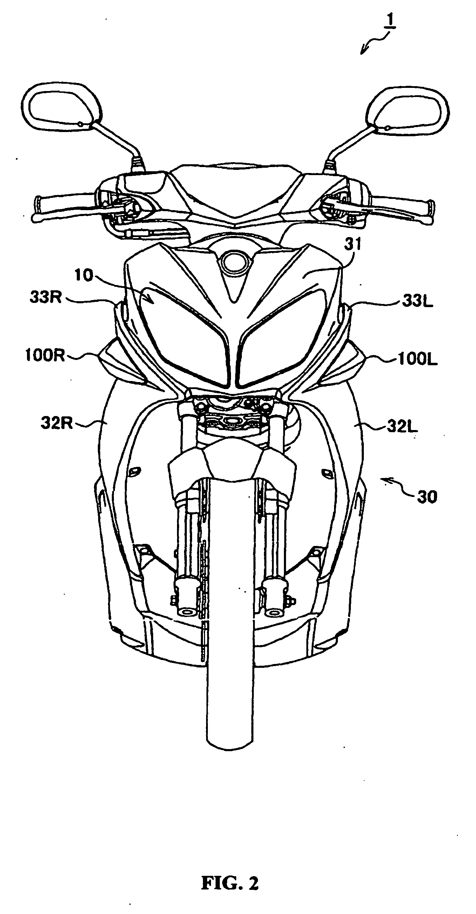

Arranged on the body cowl 30 are a headlight unit 10 and flasher lamps 100L, 100R. The flasher lamp 100R is not shown in Fig. 1 (see Fig. 2). Also, a handle cover 22 is arranged above the body cowl 30 to cover the front of a handle 21.

Fig. 2 is a front view showing the motorcycle 1. As shown in the figure, the headlight unit 10 is provided centrally of the body cowl 30 in a vehicle width direction. Also, the flasher lamps 100L, 100R are provided at both sides of the body cowl 30 in the vehicle width direction.

The body cowl 30 is formed by an upper cowl portion 31 and lower cowl portions 32L, 32R. Constricted portions 33L, 33R are formed at boundaries between the upper cowl portion 31 and the lower cowl portions 32L, 32R. The constricted portions 33L, 33R are formed to be shaped to have a predetermined width in the vehicle width direction. The constricted portions 33L, 33R are extended rearward and upward from a front end of the body cowl 30.

The upper cowl portion 31 is arranged above the front wheel 20. The upper cowl portion 31 is larger in width than the front wheel 20 and extended outwardly of the front wheel 20 in the vehicle width direction.

The lower cowl portions 32L, 32R are contiguous to the upper cowl portion 31 with the constricted portions 33L, 33R therebetween. Accordingly, the upper cowl portion 31 is smaller in width than the lower cowl portions 32L, 32R. That is, the upper cowl portion 31 is enlarged by the constricted portions 33L, 33R in the vehicle width direction to be contiguous to the lower cowl portions 32L, 32R.

The lower cowl portion 32L is arranged on a left side of the motorcycle 1 and the lower cowl portion 32R is arranged on a right side of the motorcycle 1. Accordingly, the lower cowl portions 32L, 32R are leg-shaped to extend downward from the upper cowl portion 31.

A space, in which the front wheel 20 (specifically, a front fender) is arranged, is formed between the lower cowl portion 32L and the lower cowl portion 32R.

The headlight unit 10 is provided centrally of the upper cowl portion 31 in the vehicle width direction. The flasher lamps 100L, 100R are provided at both outer ends or sides of the lower cowl portions 32L, 32R in the vehicle width direction.

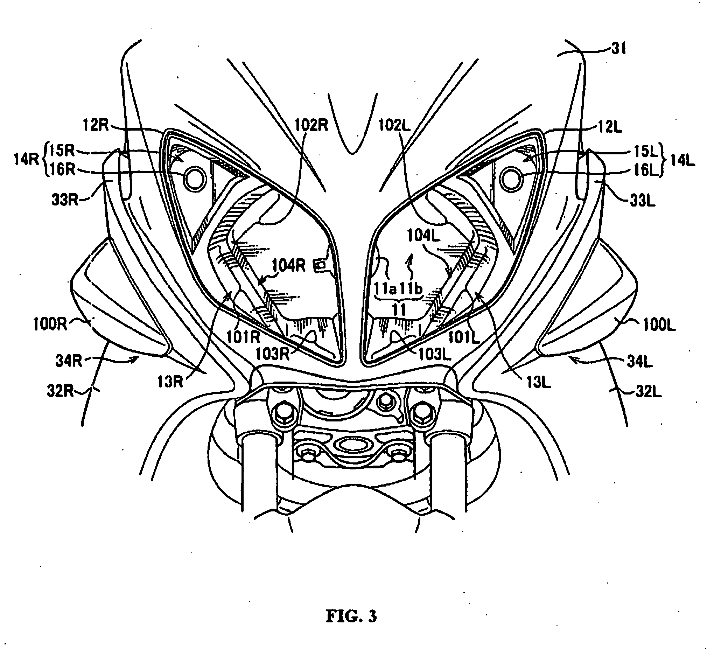

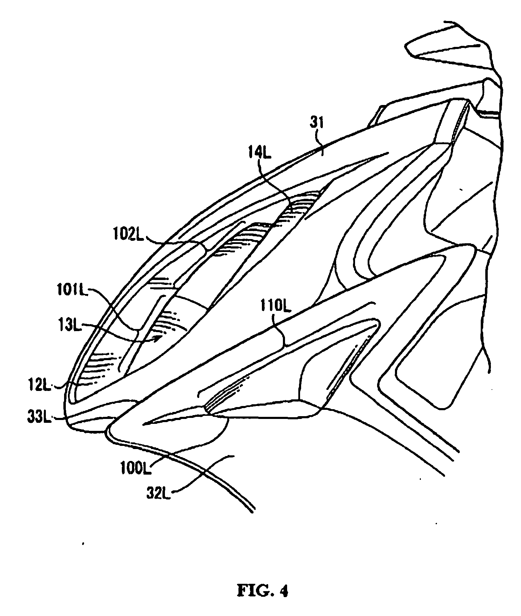

The structures of the headlight unit 10 and the flasher lamps 100L, 100R will now be described with reference to Figs. 3 and 4. In addition, the construction on the left side of the motorcycle 1 will be described mainly and an explanation for the construction on the right side thereof, which is the same as that on the left side, is appropriately omitted for brevity.

Fig. 3 is a front view showing, in enlarged scale, the region of boundaries between the upper cowl portion 31 and the lower cowl portions 32L, 32R.

As shown in the figure, the headlight unit 10 comprises a headlight 11, headlight lenses 12L, 12R, reflector outer walls 13L, 13R, and position lamps 14L, 14R.

The headlight 11 comprises a headlight bulb 11a and a reflector 11b.

The reflector 11b reflects that light, which is irradiated from the headlight bulb 11a, forward. Accordingly, the reflector 11b is formed by using a material having a high reflection effect. A bulb hole, into which the headlight bulb 11a is fitted, is formed centrally of the reflector 11b. The headlight bulb 11a lights up with a predetermined quantity of light or light intensity. The front of the headlight bulb 11a is covered by a part of the upper cowl portion 31.

The headlight lenses 12L, 12R are arranged to cover the front of the headlight 11. The headlight lenses 12L, 12R are arranged symmetrically on the left and right of that portion of the upper cowl portion 31, which covers the front of the headlight bulb 11a. In the embodiment, the headlight lenses 12L, 12R comprise a colorless, transparent lens.

Here, as viewed from the front of a vehicle, an outer periphery of the reflector 11b is formed inwardly of outer peripheries of the headlight lenses 12L, 12R in the vehicle width direction. Also, an outer periphery of the reflector 11b includes reflector straight portions 101L, 101R formed straight, reflector first curved portions 102L, 102R, and reflector second curved portions 103L, 103R.

An upper end of the reflector straight portion 101L is contiguous to the reflector first curved portion 102L and a lower end of the reflector straight portion 101L is contiguous to the reflector second curved portion 103L.

The reflector 11b includes reflector planar portions 104L, 104R formed rearward of the reflector straight portions 101L, 101R, respectively, to be made planar. Accordingly, the reflector planar portions 104L, 104R define a part of an inner wall of the reflector 11b.

The reflector outer walls 13L, 13R are formed outwardly of the reflector 11b from the reflector straight portions 101L, 101R as viewed from the front of a vehicle.

Fig. 4 is a left side view showing, in enlarged scale, the region of a boundary between the upper cowl portion 31 and the lower cowl portion 32L. As shown in the figure, the reflector outer wall 13L is extended rearward from the reflector straight portion 101L.

Accordingly, the reflector outer walls 13L, 13R are formed rearward and outward from the reflector straight portions 101L, 101R. In addition, in the embodiment, the reflector outer walls 13L, 13R are formed integral with the reflector 11b by the use of the same material as that of the reflector 11b.

The position lamps 14L, 14R comprise position lamp reflectors 15L, 15R and position lamp bulbs 16L, 16R. As shown in Fig. 3, the position lamp reflectors 15L, 15R, respectively, are formed to be triangular-shaped between outer peripheries of the headlight lenses 12L, 12R and an outer periphery of the reflector 11b.

The flasher lamps 100L, 100R comprise a lens portion and a flasher bulb (only an outward appearance of the lens portion is depicted). In the embodiment, the lens portion comprises a colorless lens. The flasher lamps flash in an amber color (or an orange color) at predetermined intervals.

As shown in Fig. 3, the flasher lamps 100L, 100R are fitted into flasher lamp receiving recesses 34L, 34R formed on the body cowl 30 (the lower cowl portions 32L, 32R). The flasher lamp receiving recesses 34L, 34R are formed symmetrically at both ends of the lower cowl portions 32L, 32R.

Also, the flasher lamps 100L, 100R are formed outwardly of the outer peripheries of the headlight lenses 12L, 12R in the vehicle width direction as shown in Fig. 3.

As shown in Fig. 4, the flasher lamps 100L, 100R are formed convexly outwardly in the vehicle width direction. Also, the flasher lamp 100L is larger in size in a vertical direction than in a longitudinal direction. That is, the flasher lamp 100L is crosswise lengthy in shape in a state of being mounted to the lower cowl portion 32L. Also, as shown in the figure, the flasher lamp 100L is similar in shape to a cross section of a blade (airfoil) as viewed laterally of a vehicle body.

Also, an outer periphery of the flasher lamp 100L (specifically, the lens portion) includes a flasher lamp straight portion 110L formed in a straight manner as shown in Fig. 4.

The flasher lamp straight portion 110L is formed to be directed rearward and upward as viewed laterally of a vehicle body. The flasher lamp straight portion 110L is positioned toward the headlight lens 12L on the outer periphery of the flasher lamp 100L.

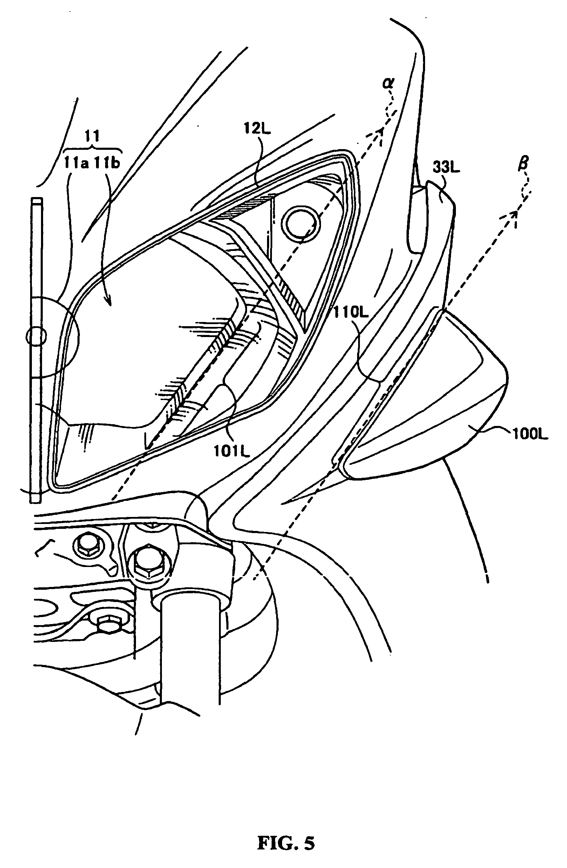

The positioning relationship between the reflector 11b and the flasher lamp 100L will now be described with reference to Fig. 5. Fig. 5 is a front view showing, in enlarged scale, the left side of the reflector 11b and the region of the flasher lamp 100L.

In addition, the construction on the left side of the motorcycle 1 will be described mainly and an explanation for the construction on the right side thereof, which is the same as that on the left side, is omitted.

As shown in Fig. 5, the reflector straight portion 101L is positioned between the headlight bulb 11a and the flasher lamp 100L. The reflector straight portion 101L is provided inside the outer periphery of the headlight lens 12L and the flasher lamp straight portion 110L is provided outside the outer periphery of the headlight lens 12L.

Here, in the embodiment, a reference line α, indicative of a direction, in which the reflector straight portion 101L is extended, and a reference line β indicative of a direction, in which the flasher lamp straight portion 110L is extended, are substantially parallel to each other as viewed from the front of a vehicle. That is, the reflector straight portion 101L and the flasher lamp straight portion 110L are formed substantially parallel to each other as viewed from the front of a vehicle.

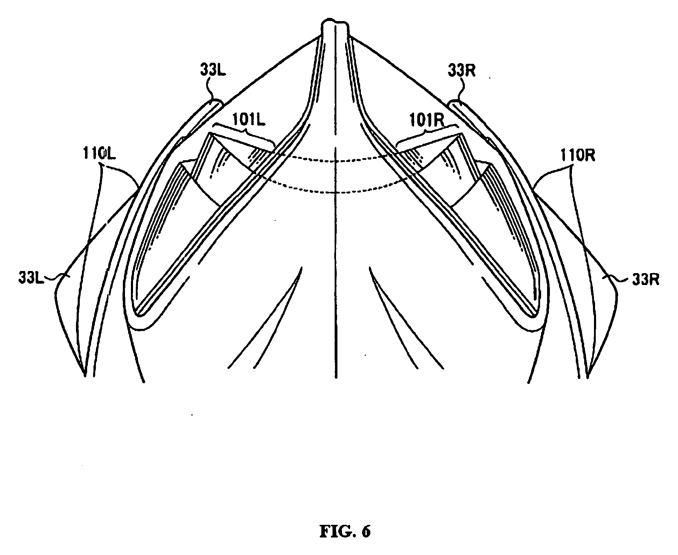

In addition, the reflector straight portion 101L and the flasher lamp straight portion 110L are not substantially parallel to each other as viewed laterally of a vehicle body (see Fig. 3) and as viewed in plan view of a vehicle body (see Fig. 6).

With the motorcycle 1 according to the embodiment, the outer periphery of the reflector 11b is provided inside the outer peripheries of the headlight lenses 12L, 12R as viewed from the front of a vehicle. The flasher lamps 100L, 100R are provided outside the outer peripheries of the headlight lenses 12L, 12R. The outer periphery of the reflector 11b includes reflector straight portions 101L, 101R formed in a straight manner.

In this manner, the outer periphery of the reflector 11b is provided inside the outer peripheries of the headlight lenses 12L, 12R, so that it is possible to make the flasher lamps 100L, 100R close to the headlight lenses 12L, 12R while ensuring sizes of the headlight lenses 12L, 12R. Consequently, it is possible to decrease the motorcycle 1 in vehicle width.

Also, the reflector straight portions 101L, 101R according to the embodiment are positioned between the headlight bulb 11a and the flasher lamps 100L, 100R. The reflector 11b includes the reflector planar portions 104L, 104R formed rearward of the reflector straight portions 101L, 101R to be made planar.

Therefore, light irradiated toward the flasher lamps 100L, 100R from the headlight bulb 11a is intercepted by the reflector straight portions 101L, 101R. Accordingly, it is possible to improve the flasher lamps in visibility as compared with the case where an outer periphery of a reflector is formed curvilinearly toward a flasher lamp. Consequently, it is possible to use a flasher lamp bulb having small power consumption while maintaining a flasher lamp in visibility.

Also, since the flasher lamps are improved in visibility, it is possible to make the flasher lamps 100L, 100R, which are provided at both ends of the body cowl 30, close to the headlight unit 10 provided centrally of the body cowl 30. Consequently, it is possible to decrease the motorcycle 1 in vehicle width also in the case where the headlight unit 10 and the flasher lamps 100L, 100R are provided integrally on the body cowl 30.

Further, by forming the reflector planar portions 104L, 104R, light irradiated from the headlight bulb 11a can be focused forward as compared with the case where a whole inner wall surface of a reflector is defined by a curved surface.

Also, the outer periphery of the reflector 11b according to the embodiment is provided inside the outer peripheries of the headlight lenses 12L, 12R as viewed from the front of a vehicle. The reflector 11b includes the reflector outer walls 13L, 13R formed outward from the reflector straight portions 101L, 101R. Therefore, it is possible to ensure the quality of outward appearance for the headlight 11 also in the case where the outer periphery of the reflector 11b is provided inside the outer peripheries of the headlight lenses 12L, 12R.

Also, the reflector straight portions 101L, 101R and the flasher lamp straight portions 110L, 110R in the embodiment are arranged substantially in parallel to each other. That is, the outer peripheries of the flasher lamps 100L, 100R are formed to be made straight in conformity to the shapes of the reflector straight portions 101L, 101R. Accordingly, it is possible to make the flasher lamps 100L, 100R further close to the headlight unit 10. Consequently, it is possible to further decrease the motorcycle 1 in vehicle width. Further, it is possible to suppress interference between light irradiated from the headlight bulb 11a and light irradiated from the flasher lamp bulb. Consequently, it is possible to improve the respective lights in visibility.

Also, the body cowl 30 includes the upper cowl portion 31, on which the headlight unit 10 is provided, the lower cowl portions 32L, 32R, on which the flasher lamps 100L, 100R are provided, and the constricted portions 33L, 33R formed at the boundaries thereof. As viewed from the front of a vehicle, the upper cowl portion 31 is smaller in width than the lower cowl portions 32L, 32R. Therefore, it is possible to further suppress interference between light irradiated from the headlight bulb 11a and light irradiated from the flasher lamp bulb.

Also, one end of the respective reflector straight portions 101L, 101R are contiguous to the first curved portions 102L, 102R and the other ends thereof are contiguous to the second curved portions 103L, 103R. Therefore, a sufficient quantity of light can be ensured for the headlight 11 by curvilinearly forming a portion of the outer periphery of the reflector 11b except portions thereof toward the flasher lamps 100L, 100R.

As described above, while the contents of the invention have been disclosed by way of an embodiment of the invention, it should not be understood that the invention is limited by the descriptions and the drawings, which constitute a part of the disclosure. The disclosure will make various alternate embodiments apparent to those skilled in the art.

For example, while the upper cowl portion 31 covers a part of the headlight 11 in the embodiment, the upper cowl portion 31 may not cover the headlight 11.

In this manner, of course, the invention includes various embodiments not described herein. Accordingly, the techical scope of the invention is determined only by the inventive specified matters related to the claims, which are appropriate from the above descriptions.
Description of Reference Numerals and Signs
α: reference line
β: reference line
1: motorcycle
10: headlight unit
11: headlight
11a: headlight bulb
11b: reflector
12L, 12R: headlight lens
13L, 13R: reflector outer wall
14L, 14R: position lamp
15L, 15R: position lamp reflector
16L, 16R: position lamp bulb
20: front wheel
21: handle
22: handle cover
30: body cowl
31: upper cowl portion
32L, 32R: lower cowl portion
33L, 33R: constricted portion
34L, 34R: flasher lamp receiving recess
36: leg shield
37: undercover
38: seat undercover
39: side cover
40: body frame
41: steering head pipe
42: downtube
50: engine
70: seat
80: rear wheel
100L, 100R: flasher lamp
101L, 101R: reflector straight portion
102L, 102R: first curved portion
103L, 103R: second curved portion
104L, 104R: reflector planar portion
110L, 110R: flasher lamp straight portion

## Claims

1. A straddle type vehicle (1) comprising:
a body cowl (30);
a headlight unit (10) provided centrally of the body cowl (30), wherein the headlight unit (10) includes a headlight (11) and a headlight lens (12L, 12R) which covers the front of the headlight (11), said headlight (11) comprising a headlight bulb (11a) and a reflector (11b) for reflecting light irradiated from the headlight bulb (11a); and
a flasher lamp (100L, 100R) arranged on a side portion of the body cowl (30),
wherein, as viewed from the front of the vehicle (1) :
an outer periphery of the reflector (11b) is provided inwardly of an outer periphery of the headlight lens (12L, 12R) ;
the flasher lamp (100L, 100R) is provided outwardly of the outer periphery of the headlight lens (12L, 12R) ;
**characterized in that**
the outer periphery of the reflector (11b) includes a reflector straight portion (101L, 101R) formed in a straight manner; and
the reflector straight portion (101L, 101R) is positioned between the headlight bulb (11a) and the flasher lamp (100L, 100R).

2. The straddle type vehicle (1) according to claim 1, wherein the reflector (11b) includes a reflector planar portion (104L, 104R) formed rearwardly of the reflector straight portion (101L, 101R) to be made planar.

3. The straddle type vehicle (1) according to claim 1 or 2, wherein the reflector (11b) further includes a reflector outer wall(13L, 13R) formed outwardly of the reflector (11b) from the reflector straight portion (101L, 101R) as viewed from the front of a vehicle (1), and
the reflector outer wall (13L, 13R) is extended rearward from the reflector straight portion (101L, 101L).

4. The straddle type vehicle (1) according to claim 1, 2 or 3, wherein as viewed from the front of the vehicle (1) :
an outer periphery of the flasher lamp (100L, 100R) includes a flasher lamp straight portion (110L, 110R) formed straight;
the reflector straight portion (101L, 101R) and the flasher lamp straight portion (110L, 110R) are arranged substantially in parallel to each other; and
the flasher lamp straight portion (110L, 110R) is positioned toward the headlight lens (12L, 12R) on the outer periphery of the flasher lamp (100L, 100R).

5. The straddle type vehicle (1) according to claim 4, wherein as viewed from the front of the vehicle:
the body cowl (30) includes an upper cowl portion (31), on which the headlight unit (10) is provided, a lower cowl portion (32L, 32R), on which the flasher lamp (100L, 100R) is provided, and a constricted portion (33L, 33R) formed at a boundary of the upper cowl portion (31) and the lower cowl portion (32L, 32R) ; and
the upper cowl portion (31) is smaller in width than the lower cowl portion (32L, 32R).

6. The straddle-ride type vehicle (1) according to any preceding claim, wherein as viewed from the front of the vehicle (1) :
the outer periphery of the reflector (11b) further includes a first curved portion (102L, 102R) and a second curved portion (103L, 103R), which are formed curvilinearly;
one end of the reflector straight portion (101L, 101R) is contiguous to the first curved portion (102L, 102R) ; and
the other end of the deflector straight portion (101L, 101R) is contiguous to the second curved portion (103L, 103R).

7. The straddle-ride type vehicle (1) according to any preceding claim, further comprising a steering head pipe (41), wherein the body cowl (30) is arranged forwardly of the steering head pipe (41).

## Patentansprüche

1. Reitsitz-Fahrzeug (1), das Folgendes umfasst:
eine Aufbauverkleidung (30),
eine Frontscheinwerfer-Einheit (10), die mittig von der Aufbauverkleidung (30) bereitgestellt wird, wobei die Frontscheinwerfer-Einheit (10) einen Frontscheinwerfer (11) und eine Frontscheinwerfer-Linse (12L, 12R), welche die Vorderseite des Frontscheinwerfers (11) abdeckt, einschließt, wobei der Frontscheinwerfer (11) eine Frontscheinwerfer-Glühlampe (11a) und einen Reflektor (11b) zum Reflektieren des von der Frontscheinwerfer-Glühlampe (11a) ausgestrahlten Lichts umfasst, und
eine Blinkerlampe (100L, 100R), die an einem Seitenabschnitt der Aufbauverkleidung (30) angeordnet ist,
wobei, gesehen von der Vorderseite des Fahrzeugs (1) aus:
ein äußerer Rand des Reflektors (11b) von einem äußeren Rand der Frontscheinwerfer-Linse (12L, 12R) aus nach innen bereitgestellt wird,
die Blinkerlampe (100L, 100R) von dem äußeren Rand der Frontscheinwerfer-Linse (12L, 12R) aus nach außen bereitgestellt wird,
**dadurch gekennzeichnet, dass**:
der äußere Rand des Reflektors (11b) einen geraden Reflektorabschnitt (101L, 101R) einschließt, der auf eine gerade Weise geformt ist, und
der gerade Reflektorabschnitt (101L, 101R) zwischen der Frontscheinwerfer-Glühlampe (11a) und der Blinkerlampe (100L, 100R) angeordnet ist.

2. Reitsitz-Fahrzeug (1) nach Anspruch 1, wobei der Reflektor (11b) einen ebenen Reflektorabschnitt (104L, 104R) einschließt, der hinter dem geraden Reflektorabschnitt (101L, 101R) so geformt ist, dass er eben hergestellt ist.

3. Reitsitz-Fahrzeug (1) nach Anspruch 1 oder 2, wobei der Reflektor (11b) ferner eine Reflektoraußenwand (13L, 13R) einschließt, die, gesehen von der Vorderseite des Fahrzeugs (1) aus, von dem geraden Reflektorabschnitt (101L, 101R) aus außerhalb des Reflektors (11b) geformt ist, und
die Reflektoraußenwand (13L, 13R) von dem geraden Reflektorabschnitt (101L, 101R) aus nach hinten verlängert ist.

4. Reitsitz-Fahrzeug (1) nach Anspruch 1, 2 oder 3, wobei, gesehen von der Vorderseite des Fahrzeugs (1) aus:
ein äußerer Rand der Blinkerlampe (100L, 100R) einen geraden Blinkerlampenabschnitt (110L, 110R) einschließt, der gerade geformt ist,
der gerade Reflektorabschnitt (101L, 101R) und der gerade Blinkerlampenabschnitt (110L, 110R) im Wesentlichen parallel zueinander angeordnet sind und
der gerade Blinkerlampenabschnitt (110L, 110R) zu der Frontscheinwerfer-Linse (12L, 12R) hin an dem äußeren Rand der Blinkerlampe (100L, 100R) angeordnet ist.

5. Reitsitz-Fahrzeug (1) nach Anspruch 4, wobei, gesehen von der Vorderseite des Fahrzeugs aus:
die Aufbauverkleidung (30) einen oberen Verkleidungsabschnitt (31), an dem die Frontscheinwerfer-Einheit (10) bereitgestellt wird, einen unteren Verkleidungsabschnitt (32L, 32R), an dem die Blinkerlampe (100L, 100R) bereitgestellt wird, und einen eingeschnürten Abschnitt (33L, 33R), der an der Grenze des oberen Verkleidungsabschnitts (31) und des unteren Verkleidungsabschnitts (32L, 32R) geformt ist, einschließt und
der obere Verkleidungsabschnitt (31) in der Breite schmaler ist als der untere Verkleidungsabschnitt (32L, 32R).

6. Reitsitz-Fahrzeug (1) nach einem der vorhergehenden Ansprüche, wobei, gesehen von der Vorderseite des Fahrzeugs (1) aus:
der äußere Rand des Reflektors (11b) ferner einen ersten gekrümmten Abschnitt (102L, 102R) und einen zweiten gekrümmten Abschnitt (103L, 103R), die krummlinig geformt sind, einschließt,
das eine Ende des geraden Reflektorabschnitts (101L, 101R) an den ersten gekrümmten Abschnitt (102L, 102R) anstößt und
das andere Ende des geraden Reflektorabschnitts (101L, 101R) an den zweiten gekrümmten Abschnitt (103L, 103R) anstößt.

7. Reitsitz-Fahrzeug (1) nach einem der vorhergehenden Ansprüche, das ferner ein Steuerkopfrohr (41) umfasst, wobei die Aufbauverkleidung (30) vor dem Steuerkopfrohr (41) angeordnet ist.

## Revendications

1. Véhicule du type à enfourcher (1), comprenant :
un carénage de la carrosserie (30) ;
une unité de phare (10), agencée au centre du carénage de la carrosserie (30), l'unité de phare (10) englobant un phare (11) et une glace de phare (12L, 12R), recouvrant l'avant du phare (11), ledit phare (11) comprenant une ampoule de phare (11a) et un réflecteur (11b), pour réfléchir la lumière irradiée à partir de l'ampoule du phare (11a) ; et
un clignotant (100L, 100R), agencé sur une partie latérale du carénage de la carrosserie (30) ;
dans lequel, vu de l'avant du véhicule (1) :
une périphérie externe du réflecteur (11b) est agencée vers l'intérieur d'une périphérie externe de la glace du phare (12L, 12R) ;
le clignotant (100L, 100R) est agencé vers l'extérieur de la périphérie externe de la glace du phare (12L, 12R) ;
**caractérisé en ce que**
la périphérie externe du réflecteur (11b) englobe une partie droite de réflecteur (101L, 101R), formée d'une manière droite ; et
la partie droite du réflecteur (101L, 101R) est positionnée entre l'ampoule du phare (11a) et le clignotant (100L ; 100R).

2. Véhicule du type à enfourcher (1) selon la revendication 1, dans lequel le réflecteur (11b) englobe une partie plane de réflecteur (104L, 104R), formée vers l'arrière de la partie droite du réflecteur (101L, 101R), pour lui conférer une forme plane.

3. Véhicule du type à enfourcher (1) selon les revendications 1 ou 2, dans lequel le réflecteur (11b) englobe en outre une paroi externe de réflecteur (13L, 13R), formée vers l'extérieur du réflecteur (11b), à partir de la partie droite du réflecteur (101L, 101R), vu à partir de l'avant d'un véhicule (1) ; et
la paroi externe du réflecteur (13L, 13R) est étendue vers l'arrière à partir de la partie droite du réflecteur (101L, 101R).

4. Véhicule du type à enfourcher (1) selon les revendications 1, 2 ou 3, dans lequel, vu à partir de l'avant du véhicule (1) :
une périphérie externe du clignotant (100L, 100R) englobe une partie droite de clignotant (110L, 110R), formée de manière droite ;
la partie droite du réflecteur (101L, 101R) et la partie droite du clignotant (110L, 110R) sont agencées de manière pratiquement parallèle l'une à l'autre ; et
la partie droite du clignotant (110L, 110R) est positionnée vers la glace du phare (12L, 12R), sur la périphérie externe du clignotant (100L, 100R).

5. Véhicule du type à enfourcher (1) selon la revendication 4, dans lequel, vu à partir de l'avant du véhicule :
le carénage de la carrosserie (30) englobe une partie de carénage supérieure (31), sur laquelle est agencée l'unité de phare (10), une partie de carénage inférieure (32L, 32R), sur laquelle est agencé le clignotant (100L, 100R), et une partie resserrée (33L, 33B), formée au niveau d'une limite entre la partie de carénage supérieure (31) et la partie de carénage inférieure (32L, 32R) ; et
la partie de carénage supérieure (31) a une largeur inférieure à celle de la partie de carénage inférieure (32L, 32R).

6. Véhicule du type à enfourcher (1) selon l'une quelconque des revendications précédentes, dans lequel, vu de l'avant du véhicule (1) :
la périphérie externe du réflecteur (11b) englobe en outre une première partie courbée (102L, 102R) et une deuxième partie courbée (103L, 103R), formées de manière curviligne ;
une extrémité de la partie droite du réflecteur (101L, 101R) est contiguë à la première partie courbée (102L, 102R) ; et
l'autre extrémité de la partie droite du réflecteur (101L, 101R) est contiguë à la deuxième partie courbée (103L, 103R).

7. Véhicule du type à enfourcher (1) selon l'une quelconque des revendications précédentes, comprenant en outre un tube de tête de direction (41), le carénage de la carrosserie (30) étant agencé vers l'avant du tube de tête de direction (41).
